Europäisches Patentamt

European Patent Office

Office européen des brevets

(19)

(11) Veröffentlichungsnummer: **0 315 741 B1**

(12) **EUROPÄISCHE PATENTSCHRIFT**

(45) Veröffentlichungstag der Patentschrift: **23.10.91**

(51) Int. Cl.⁵: **B60K 17/35**, F16D 41/04

(21) Anmeldenummer: **88113648.5**

(22) Anmeldetag: **23.08.88**

(54) **Vorrichtung zum Antrieb eines Kraftfahrzeugs.**

(30) Priorität: **09.11.87 DE 3738008**

(43) Veröffentlichungstag der Anmeldung:
**17.05.89 Patentblatt 89/20**

(45) Bekanntmachung des Hinweises auf die
Patenterteilung:
**23.10.91 Patentblatt 91/43**

(84) Benannte Vertragsstaaten:
**DE ES FR GB IT SE**

(56) Entgegenhaltungen:
**EP-A- 214 757      EP-A- 240 795
DE-A- 3 507 490    DE-A- 3 708 193
GB-A- 2 139 972    US-A- 2 791 130
US-A- 3 327 822**

(73) Patentinhaber: **Dr.Ing.h.c. F. Porsche Aktiengesellschaft
Porschestrasse 42
W-7000 Stuttgart 40(DE)**

(72) Erfinder: **Müller, Robert, Dipl.-Ing.
Badstrasse 21
W-7251 Moensheim(DE)**
Erfinder: **Gausrab, Klaus, Dipl.-Ing.
Knoedlergasse 4
W-7302 Ostfildern 2(DE)**

Rank Xerox (UK) Business Services

**Beschreibung**

Die Erfindung betrifft eine Vorrichtung zum Antrieb eines Kraftfahrzeugs nach dem Oberbegriff des Anspruchs 1.

Eine ähnliche Antriebsvorrichtung ist in DE-A-37 08 193 beschrieben. Durch einen an der Vorderachse angeordneten Motorgetriebeblock werden die Räder der Vorderachse ständig und unmittelbar angetrieben. Der Antrieb zur Hinterachse erfolgt mittels einer im Längsstrang zwischen Vorderachse und Hinterachse liegenden Viskokupplung. Um bei gebremstem Fahrzeug eine Drehmomententkopplung zu erreichen und die Fahrstabilität zu verbessern, ist zusätzlich in den Antriebsstrang ein Freilauf eingesetzt.

Beim Rückwärtsfahren des Fahrzeugs wird ebenfalls ein Allrad-Antrieb dadurch erreicht, daß eine zum Freilauf parallel liegende Überbrückungskupplung geschlossen wird. Die Viskokupplung, der Freilauf und die Überbrückungskupplung sind innerhalb eines sie umschließenden Gehäuses angeordnet, das an der Hinterachse angebracht ist.

Es ist die Aufgabe der Erfindung, durch eine besondere konstruktive Gestaltung und Lagerung einer solchen Antriebsvorrichtung eine exakte Zuordnung zwischen einer Antriebswelle und einer Ausgangswelle der Allrad-Sperrvorrichtung zu erreichen und sie ohne größere Umbauarbeiten für unterschiedliche Fahrzeugtypen verwendbar zu machen.

Eine Lösung dieser Aufgabe gelingt mit den kennzeichnenden Merkmalen des Anspruchs 1. Wenn die Ausgangswelle der Allrad-Sperrvorrichtung an ihrer einen Seite in einem zentrischen Lager der Antriebswelle, an ihrer anderen Seite in einer an das Achsgehäuse angeflanschten Lagerhülse gelagert ist, läßt sich eine exakte Zuordnung der Lager für die Ausgangswelle und die Antriebswelle erreichen. Denn die Flanschebenen zum Anschrauben des Gehäuses, in dem die Antriebswelle gelagert ist und der Lagerhülse können am Achsgehäuse mit einer Aufspannung auf der Bearbeitungsmaschine gefertigt werden. Zum Einbau in unterschiedliche Fahrzeugtypen ist es lediglich erforderlich, die Flanschebenen und Bohrungen der Achsgehäuse an die erfindungsgemäße Allrad-Sperrvorrichtung anzupassen.

Ein Ausführungsbeispiel der Erfindung ist in der Zeichnung dargestellt und wird nachfolgend erläutert.

Es zeigen:

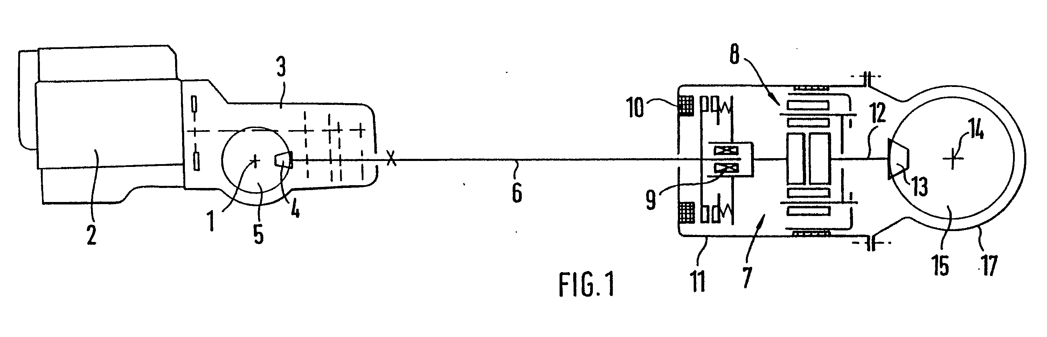

Fig. 1 Antriebsschema eines Kraftfahrzeugs,

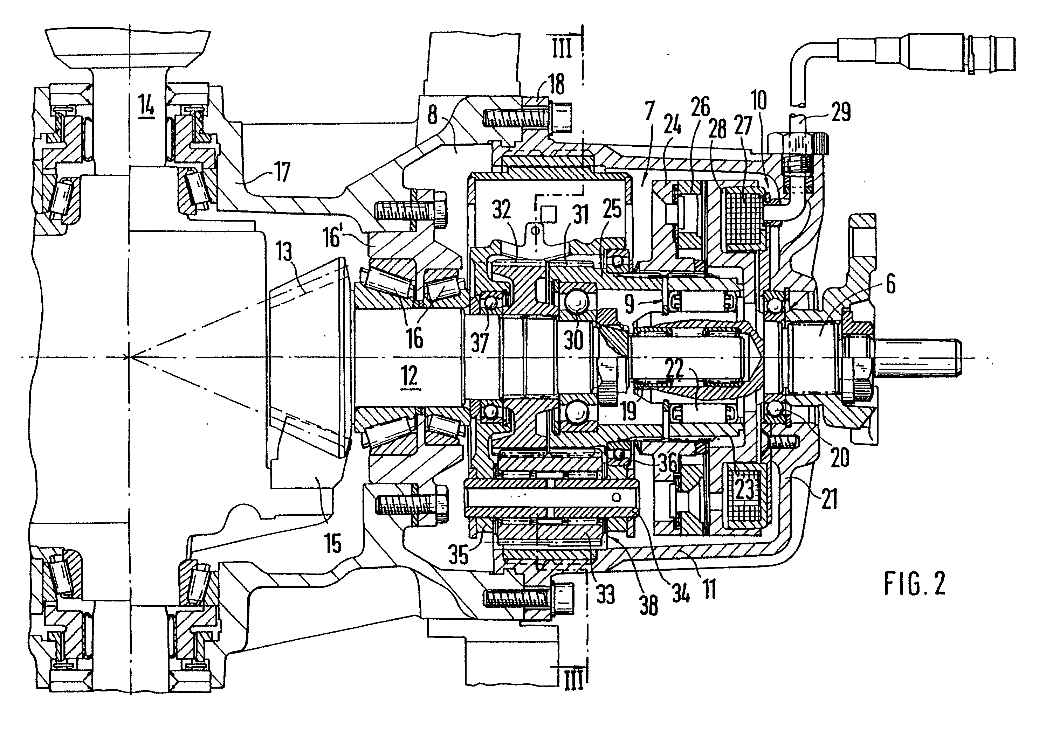

Fig. 2 Längsschnitt durch die Allradantriebseinheit,

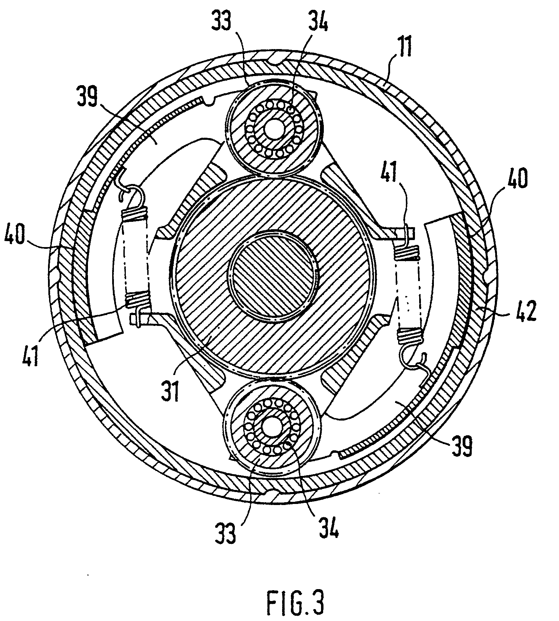

Fig. 3 Querschnitt nach Linie III-III der Fig. 2.

Ein nahe der Vorderachse 1 an einem Kraftfahrzeug angeordneter Antriebsmotor 2 treibt mit einem an ihm angebrachten Gangschaltgetriebe 3 über ein Kegelrad 4 und ein Tellerrad 5 die Vorderachse 1 an. Von dem Kegelrad 4 geht eine Antriebswelle 6 zu einer Antriebseinheit 7 bestehend aus einer Allrad-Sperrvorrichtung 8, einem ihr vorgeschalteten Freilauf 9 und einer zum Freilauf 9 parallel geschalteten elektromagnetisch betätigten Überbrückungskupplung 10 und einem sämtliche Antriebsglieder umschließenden Gehäuse 11. Eine Ausgangswelle 12 der Allrad-Sperrvorrichtung 8 trägt stirnseitig ein Kegelritzel 13, mit dem ein an der Hinterachse 14 angebrachtes Tellerrad 15 angetrieben wird. Die Ausgangswelle 12 ist im Bereich des Kegelritzels 13 in Kegelrollenlagern 16 einer Lagerhülse 16′ gelagert, die an das Achsgehäuse 17 der Hinterachse 14 angeflanscht ist. Dazu konzentrisch ist das Gehäuse 11 ebenfalls mit einem Flansch 18 an das Achsgehäuse 17 angeschraubt, so daß die alle funktionswichtigen Teile enthaltende Antriebseinheit 7 als kompaktes Bauteil an der Hinterachse 14 montierbar ist.

An ihrem anderen Ende ist die Ausgangswelle 12 zentral in der Antriebswelle 6 in zwei Nadellagern 19 gelagert. Die Antriebswelle 6 selbst ist in einem Kugellager 20 gelagert, das in der stirnseitigen Wand 21 des Gehäuses 11 befestigt ist. Auf der Antriebswelle 6 ist im Bereich der Nadellager 19 der aus Klemmrollen 22 bestehende Freilauf 9 angeordnet, der über eine ihn umgreifende Hülse 23 mit Kerbverzahnung mit einer Kupplungsscheibe 24 der Überbrückungskupplung 10 drehmomentübertragend in Verbindung steht. Diese Kupplungsscheibe 24 ist ebenfalls über eine Kerbverzahnung mit einer Eingangswelle 25 der Allradsperr-Vorrichtung 8 verbunden. Bei Normalbetrieb sind die Klemmrollen 22 des Freilaufs 9 in Sperrstellung und übertragen das Drehmoment der Antriebswelle 6 auf die Sperrvorrichtung 8. Läuft beim Bremsen die Ausgangswelle 12 schneller als die Antriebswelle 6, so wird die Sperrung am Freilauf 9 aufgehoben. Die Ausgangswelle 12 wird von der Antriebswelle 6 entkoppelt und die Allradsperrvorrichtung 8 wird unwirksam.

Beim Rückwärtsfahren des Kraftfahrzeugs, wenn die Antriebswelle 6 in umgekehrter Richtung umläuft, ist die Sperrung am Freilauf 9 ebenfalls aufgehoben. Um auch hierbei die Allrad-Sperrvorrichtung 8 wirksam werden zu lassen, steht der Kupplungsscheibe 24 eine zweite Kupplungsscheibe 26 gegenüber, die auf der Antriebswelle 6 befestigt ist. Beide Kupplungsscheiben 24 und 26 sind an den einander zugewandten Stirnflächen verzahnt. Wird ein ringförmiger Elektromagnet 27, der am Gehäuse 11 befestigt ist und mit reichlich bemessenem allseitigen Luftspalt in eine stirnseitige Ringaussparung 28 der Kupplungsscheibe 26 hineinragt, über eine Elektroleitung 29 an Spannung gelegt, so wird die Kupplungsscheibe 24 entgegen Federkraft zu der Kupplungsscheibe 26 hingezogen. Die stirnseitigen Verzahnungen beider Kupplungsscheiben 24, 26 rasten formschlüssig ineinander ein. Die Drehbewegung der Antriebswelle 6 wird unter Umgehung des Freilaufs 9 über die nun geschlossene Überbrückungskupplung 10 zur Eingangswelle 25 der Allrad-Sperrvorrichtung 8 übertragen. Das Anlegen der Spannung an den Elektromagnet 27 und das Schließen der Überbrückungskupplung 10 kann beim Schalten des Rückwärtsgangs durch einen eingebauten Tastschalter automatisch erfolgen.

Die als Hohlwelle ausgebildete Eingangswelle 25 zur Allrad-Sperrvorrichtung 8 ist mit einem Kugellager 30 auf der Ausgangswelle 12 gelagert. Am Außenmantel trägt die Eingangswelle 25 eine Verzahnung, die als Eingangssonnenrad 31 eines Planetengetriebes 38 dient. Neben dem Eingangssonnenrad 31 ist zu ihm koaxial ein Ausgangssonnenrad 33 auf der Ausgangswelle 12 drehfest. Die Außendurchmesser beider Sonnenräder 31 und 32 sind etwa gleich, jedoch weist das Ausgangssonnenrad 32 einen bis vier Zähne mehr auf als das Eingangssonnenrad 31. Mit beiden Sonnenrädern 31, 32 stehen Planetenräder 33 im Eingriff. Die Planetenräder 33 sind auf Lagerbolzen 34 gelagert, die beidseitig in einem Planetenträger 35 befestigt sind. Der Planetenträger 35 ist auf einem Kugellager 36 auf der Eingangswelle 25 und auf einem Kugellager 37 der Ausgangswelle 12 gelagert. Auf den Lagerbolzen 34 sind als Fliehgewichte ausgebildete Bremsbacken 39 drehbar gelagert, die mit ihren Bremsbelägen 40 entgegen der Kraft von Federn 41 an einer Bremstrommel 42 des Gehäuses 11 reibend anliegen und den Planetenträger 35 abbremsen.

Dreht die Vorderachse 1 beispielsweise infolge Durchrutschens auf Eis schneller als die Hinterachse 14, so werden der Planetenträger 35 und mit ihm die Bremsbacken 39 mit hoher Übersetzung von ca. 16 : 1 zur Differenzdrehzahl Vorderachse-Hinterachse in Drehung versetzt. Die an der Bremstrommel 42 des Gehäuses 11 reibenden Bremsbacken 39 erzeugen einen Widerstand, der eine Drehmomentübertragung an die Hinterachse 14 zur Folge hat. Wegen der hohen Übersetzung und des damit verbundenen schlechten Zahnradwirkungsgrades ist das aufzubringende Bremsmoment so gering, daß eine kleinvolumige Fliehkraftbremse ausreicht, die zusammen mit dem Freilauf 9 und der Überbrückungskupplung 10 raumsparend in dem zylindrischen Gehäuse 11 untergebracht ist. Zur Anpassung an verschiedene Fahrzeugtypen braucht lediglich die Masse der Bremsbacken 39 geringfügig variiert zu werden. Alle anderen Teile der Antriebseinheit 7 können unverändert bleiben.

**Patentansprüche**

1. Vorrichtung zum Antrieb eines Kraftfahrzeugs, mit einer im Antriebsstrang Vorderachse- (1) Hinterachse (14) angeordneten, permanent wirkenden Allrad-Sperrvorrichtung (8), einem freilauf (9) und einer schaltbaren Überbrückungskupplung (10) für den freilauf (9), die nebeneinander, zueinander koaxial innerhalb eines sie umschließenden Gehäuses (11) angeordnet sind, das an ein Achsgehäuse (17) der Vorderachse oder Hinterachse (14) anflanschbar ist, wobei das Antriebsmoment in das Gehäuse (11) über eine Antriebswelle (6) eingeleitet und über eine zu ihr koaxiale Ausgangswelle (12) an einen Kegelritzel-Tellerrad- Winkeltrieb (15) des Achsgehäuses (17) abgegeben wird, dadurch gekennzeichnet, daß die Ausgangswelle (12) der Allrad-Sperrvorrichtung (8) an ihrer einen Seite in einem zentrischen Lager (19) der Antriebswelle (6) gelagert ist, an ihrer anderen Seite mit einem Kegelritzel (13) versehen ist und in Kegelrollenlagern (16) gelagert ist, die in einer an das Achsgehäuse (17) angeflanschten Lagerhülse (16') befestigt sind.

2. Vorrichtung nach Anspruch 1, dadurch gekennzeichnet, daß sie im Längswellenstrang (6) des Kraftfahrzeugs zwischen Vorderachse (1) und Hinterachse (14) liegt und daß ihr Gehäuse (11) an das Achsgehäuse (17) der Hinterachse (14) angeflanscht ist.

3. Vorrichtung nach Anspruch 1, dadurch gekennzeichnet, daß die Überbrükkungskupplung (10) aus zwei stirnseitig verzahnten Kupplungsscheiben (24, 26) gebildet ist, die durch Einschalten eines Elektromagnets (27) formschlüssig miteinander verbindbar sind.

4. Vorrichtung nach Anspruch 1 und 3, dadurch gekennzeichnet, daß die eine Kupplungsscheibe (26) auf einer Antriebswelle (6) drehfest ist, die über den Freilauf (22) mit einer Eingangswelle (25) zur Allrad-Sperrvorrichtung (8) und der zur Eingangswelle (25) drehfesten anderen Kupplungsscheibe (24) in Drehverbindung steht.

5. Vorrichtung nach Anspruch 4, dadurch gekennzeichnet, daß der Elektromagnet (27) am Gehäuse (11) befestigt ist und mit seitlichem Luftspalt in einer stirnseitigen Ringaussparung (28) der Kupplungsscheibe (26) angeordnet ist, und daß er bei Stromzufuhr die Verzahnung der Kupplungsscheibe (24) in die Verzahnung der Kupplungsscheibe (26) einrückt.

6. Vorrichtung nach Anspruch 1, dadurch gekennzeichnet, daß die Allrad-Sperrvorrichtung (8) aus einem Planetengetriebe (8) und Bremsbakken (39) gebildet ist, die mit dem Planetenträger (35) umlaufen und an einer Bremstrommel (42) des Gehäuses (11) ein Bremsmoment auf den Planetenträger (35) ausüben.

**Claims**

1. A device for driving a motor vehicle, having a permanently operating all-wheel locking device (8) arranged in the driving train comprising the front axle (1) and rear axle (14), a freewheel (9) and an engageable bridging clutch (10) for the freewheel (9), arranged adjacent to one another and coaxially with one another inside a housing (11) surrounding them and being flange-mountable on a housing (17) of the front axle or the rear axle (14), the driving moment being introduced into the housing (11) by way of a ·drive shaft (6) and being transmitted to a bevel-pinion crown-gear angle drive (15) of the axle housing (17) by way of an output shaft (12) coaxial with the said drive shaft (6), characterized in that the output shaft (12) of the all-wheel locking device (8) is mounted on one side in a central bearing (19) of the drive shaft (6), is provided on the other side with a bevel pinion (13) and is mounted in tapered roller bearings (16) secured in a bearing sleeve (16') flange-mounted on the axle housing (17).

2. A device according to Claim 1, characterized in that it lies in the longitudinal shaft train (6) of the motor vehicle between the front axle (1) and the rear axle (14), and its housing (11) is flange-mounted on the housing (17) of the rear axle (14).

3. A device according to Claim 1, characterized in that the bridging clutch (10) is formed by two clutch discs (24, 26) toothed on their front faces and connectable together in a positive locking manner by switching on an electromagnet (27).

4. A device according to Claims 1 and 3, characterized in that one clutch disc (26) is rotationally fixed on a drive shaft (6) rotationally connected by way of the freewheel (22) [*sic*] to an input shaft (25) for the all-wheel locking device (8) and [to] the other clutch disc (24) rotationally fixed to the input shaft (25).

5. A device according to Claim 4, characterized in that the electromagnet (27) is secured to the casing (11) and is arranged with a lateral air gap in a front annular recess (28) in the clutch disc (26), and when current is supplied it engages the toothing of clutch disc (24) with the toothing of clutch disc (26).

6. A device according to Claim 1, characterized in that the all-wheel locking device (8) is formed by a planetary gearing (8) and brake jaws (39) rotating with the planetary gearing (8) and exerting a braking moment upon the planetary gearing (35) on a brake drum (42) of the housing (11).

**Revendications**

1. Dispositif d'entraînement d'un véhicule automobile comprenant un dispositif de blocage du différentiel pour les quatre roues (8) fonctionnant de façon permanente et monté dans l'ensemble d'entraînement constitué par l'essieu avant (1) et l'essieu arrière (14), une roue libre (9) et un accouplement de pontage commutable (10) pour la roue libre (9), qui sont disposés les uns contre les autres à l'intérieur d'un carter (11) qui les entoure et qui est monté contre un carter d'essieu (17) de l'essieu avant (1) ou de l'essieu arrière (14), le couple d'entraînement étant induit dans le carter (11) par un arbre d'entraînement (6) et transmis par l'intermédiaire d'un arbre de sortie (12) qui est coaxial à une commande par engrenage d'angle, pignon conique et couronne de différentiel (15) du carter d'essieu (17), caractérisé en ce que l'arbre de sortie (12) du dispositif de blocage du différentiel (8) est monté sur un côté dans un palier central (19) de l'arbre d'entraînement (6) et muni sur son autre coté d'un pignon conique (13) et monté dans des paliers à rouleaux coniques (16) qui sont fixés dans un manchon à palier (16) monté contre le carter d'essieu (17).

2. Dispositif selon la revendication 1, caractérisé en ce qu'il est disposé dans l'arbre d'entraînement (6) du véhicule automobile entre l'essieu avant (1) et l'essieu arrière (14) et son carter (11) est monté contre le carter (17) de l'essieu arrière (14).

3. Dispositif selon la revendication 1, caractérisé en ce que l'accouplement de pontage (10) est constitué par deux disques d'accouplement (24, 26) pouvant être reliés l'un à l'autre par concordance de formes par l'excitation d'un électroaimant (27).

4. Dispositif selon les revendications 1 et 3, caractérisé en ce qu'un disque d'accouplement (26) est monté de façon fixe en rotation sur un arbre d'entraînement (6) et est relié de façon rotative avec un arbre d'entrée (25) du dispositif de blocage du différentiel pour les quatre roues (8) par l'intermédiaire de la roue libre (22) avec l'autre disque d'accouplement (24) qui est fixe en rotation par rapport à l'arbre d'entrée (25).

5. Dispositif selon la revendication 4, caractérisé en ce que l'électroaimant (27) est fixé au carter (11) et est monté avec un entrefer latéral dans un évidement annulaire frontal (28) du disque d'accouplement (26), et en ce que la denture du disque d'accouplement (24) engrène avec la denture du disque d'accouplement (26) lors de l'application du courant.

6. Dispositif selon la revendication 1, caractérisé en ce que le dispositif de blocage du différentiel (8) est formé par un mécanisme planétaire (8) et des mâchoires de freinage (39) qui tournent avec la cage de transmission planétaire (35) et exercent sur un tambour de freinage (42) du carter (11) un couple de freinage sur la cage de transmission planétaire (35).

FIG.1

FIG. 2

EP 0 315 741 B1

FIG.3